# EUROPÄISCHE PATENTSCHRIFT

(11) **EP 0 831 028 B1**
(45) Veröffentlichungstag und Bekanntmachung des Hinweises auf die Patenterteilung: **27.06.2001**
(21) Anmeldenummer: 97115812.6
(22) Anmeldetag: 11.09.1997
(51) Int. Cl.: B65B 59/00, B65G 17/42, B67C 7/00

(54) **Transporteinrichtung an einer Behälter-Füll- und/oder Verschliessmaschine**
Conveyor for a container-filling and/or closing machine
Convoyeur pour une machine de remplissage et/ou de bouchage

(30) Priorität: 20.09.1996 DE 19638509; 05.11.1996 DE 19645454
(43) Veröffentlichungstag der Anmeldung: 25.03.1998
(73) Patentinhaber: BENHIL GASTI Verpackungsmaschinen GmbH, 41468 Neuss (DE)
(72) Erfinder: Horlacher, Willy, 74541 Vellberg (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 060 720
- EP-A- 0 498 776
- FR-A- 647 200
- FR-A- 1 508 871
- GB-A- 731 361
- US-A- 2 954 113
- US-A- 3 040 873

## Beschreibung

Die Erfindung bezieht sich auf eine Transporteinrichtung nach dem Oberbegriff des Anpruches 1.

Eine Transporteinrichtung der eingangs genannten Art geht aus der US-Patentschrift 2,954,113 hervor. Bei dieser Transporteinrichtung sind an nach unten weisenden Laschen von Tragplatten einseitig offene Eingriffausnehmungen vorgesehen, die über Zapfen der Kettenglieder einer Transportkette geschoben werden können. Aufgetrennte Endteile, die Eingriffausnehmungen zwischen sich einschließen, müssen beim Aufstecken aufgespreizt werden, was bedeutet, daß zumindest Teile der Kupplungselemente elastisch ausgebildet sein müssen.

Der Erfindung liegt die Aufgabe zugrunde, eine Transporteinrichtung der eingangs genannten Art zu schaffen, die bei genauer und stabiler Lage der Tragplatten deren einfaches und schnelles Auswechseln auch unter erschwerten Bedingungen sicherstellt.

Diese Aufgabe wird durch die Merkmale des kennzeichnenden Teils des Anspruches 1 gelöst.

Mit den Mitteln nach der Erfindung kommt man zu einer Transporteinrichtung, die sich besonders für den Einsatz bei Behälter-Füll- und/oder Verschließmaschine zum Abfüllen von Behältern mit den unterschiedlichsten Produkten, insbesondere für flüssige bis pastöse Produkten eignet. Unterschiedliche Produktfüllungen bedingen unterschiedliche Behälterformen und -größen und zwangsläufig damit auch den Einsatz unterschiedlich gestalteter Zellenbleche, in denen die zur Aufnahme des Produktes dienenden Behälter eingesetzt werden. Die Behälteraufnahmen müssen mit den jeweiligen Behältergrößen entsprechend ausgebildet sein, so daß bei jeden Produktwechsel die unterschiedlichen Behälter auch die Zellenbleche auszuwechseln sind.

Aufgrund der erfindungsgemäßen Merkmale läßt sich ein derartiger Formatwechsel einfach und schnell durch den Maschinenbediener durchführen. Außerdem lassen sich die ausgewechselten Zellenbleche genau ausrichten, so daß in einer Arbeitsstation, z. B. in einer Siegelstation einer Füll- und Verschließmaschine, die Zellenbleche bzw. die darin befindlichen Behälteraufnahmen mit den eingesetzten Behältern in den Zellenblechen paßgenau unterhalb des Siegelwerkzeugs zu liegen kommen. Durch das erfindungsgemäße Fixieren der Zellenbleche gegen Herausfallen kommt man zu einer vergleichsweisen glatten Oberfläche , so daß insofern auch den Hygienevorschriften für Lebensmittel bestens entsprochen wird.

Von besonderem Vorteil ist, daß die Kupplungselemente von an gegenüberliegenden Seiten der Zellenbleche angeordneten Mitnehmerlaschen und die Gegenkupplungselemente des von zwei mit Abstand zueinander endlos umlaufend angetriebenen Ketten oder dergleichen, vorzugsweise Rollenketten, gebildeten Transportmittels von über die Kettenglieder seitlich überstehenden Kettengliedbolzen gebildet sind. Hierdurch wird vor allen Dingen sichergestellt, daß die Mitnehmerlaschen an der genauestmöglichen Stelle der Transportkette paßgenau fixiert eingehängt sind, so daß keine präzisen Bohrungen in den Winkellaschen erforderlich sind.

Das gilt insbesondere für den Fall, daß die Mitnehmerlaschen im Querschnitt im wesentlichen U-förmig ausgebildet sind und deren mit Abstand gegenüberliegende Seitenwandungen die jeweils zugeordnete Transportkette reiterartig umgreifen. Auf diese Weise wird eine doppelte Abstützung bzw. Einhängung gewährleistet, so daß sich eine noch stabilere Lage ergibt. Dazu trägt ferner bei, daß in jeder Seitenwandung der Mitnehmerlaschen wenigstens eine, vorzugsweise zwei Lagerausnehmungen angeordnet sind, die mit entsprechend beidseitig über die Kettenglieder vorstehenden Bolzenteilen der Kettengliedbolzen zusammenwirken, dergestalt, daß die Mitnehmerlaschen lose eingehängt sind.

Theoretisch könnten die Mitnehmerlaschen einstückig mit den Zellenblechen ausgebildet sein, vorzugsweise sind diese jedoch zusätzlich durch einen Stift zentriert, an dem Zellenblech fest angeschraubt. Diese Verschraubung wird nicht beim Zellenblechwechsel gelöst. Außerdem befindet sich die Verschraubung auf der Unterseite (Sackbohrung), so daß die Oberfläche der Zellenbleche vollständig glatt ist.

Damit eine noch weitergehende stabile Lage, insbesondere auch in den Umlenk- und Wendebereichen der Transporteinrichtung erreicht wird, sind an der Außenseite der außenliegenden Seitenwandung Führungsflächen vorgesehen, die mit im Längsbereich der Transporteinrichtung befindlichen Gleitschienen und/oder im Umlenk- bzw. Wendebereich der Transporteinrichtung angeordneten, halbkreisförmig ausgebildeten Gleitelementen zusammenwirken.

Schließlich wird ein Zellenblechwechsel in besonderem Maße dadurch begünstigt, daß die Gleitschienen und diese tragende Abstützkörper im Längsbereich der Transporteinrichtung auf einem zum Einbringen und/oder entfernen von Zellenblechen geeigneten Teilstück unterbrochen ausgebildet sind und in dieser Unterbrechung jeweils ein aufklappbarer und verschließbarer Niederhalter angeordnet ist.

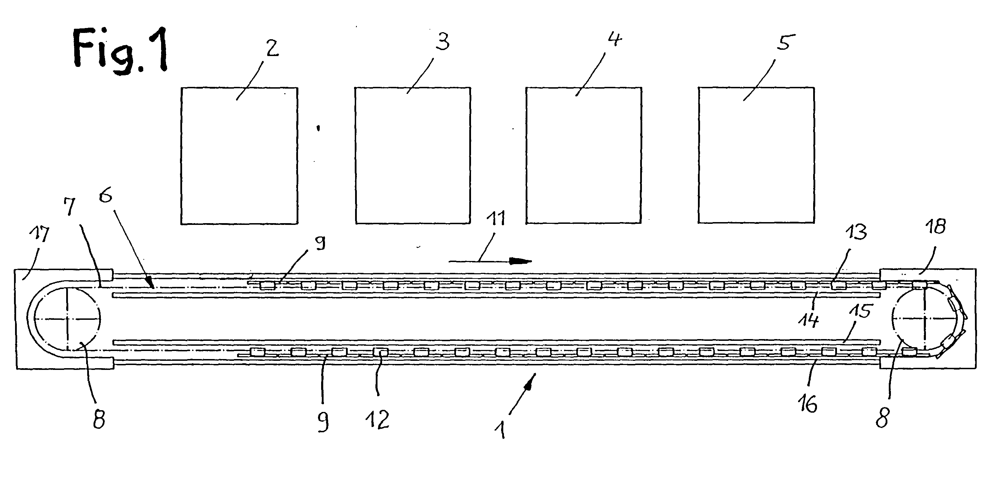

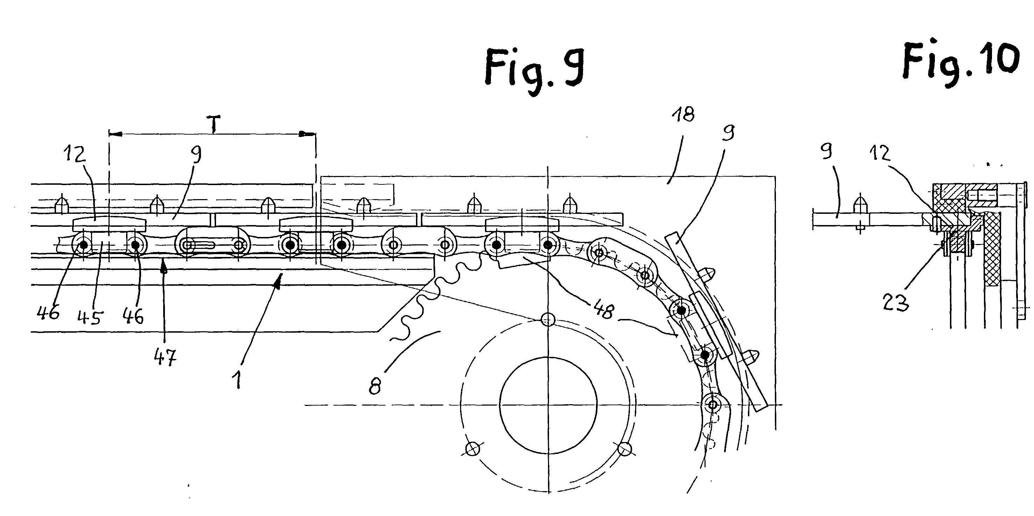

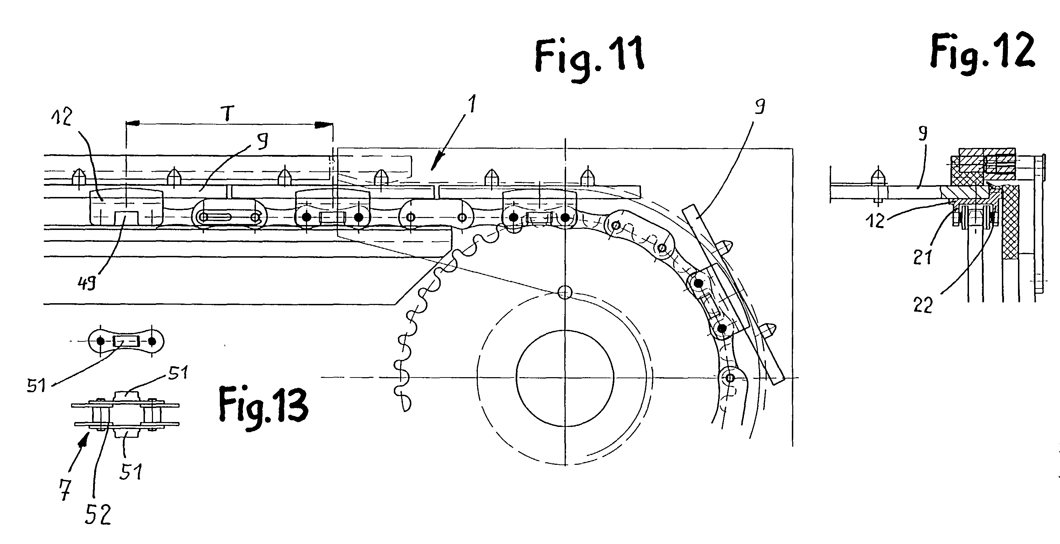

Bevorzugte Ausführungsbeispiele der Erfindung sind in der Zeichnung dargestellt und werden im folgenden näher erläutert. Es zeigen:
Figur 1
   eine schematische Darstellung einer Transporteinrichtung einer Behälter-Füll- und Verschließmaschine,
Figur 2
   eine Aufsicht auf ein Zellenblech in in bezug auf Fig. 1 vergrößertem Maßstab,
Figur 3
   die zugehörige Vorderansicht des Zellenblechs,
Figur 4
   eine Seitenansicht des Zellenblechs in teilweisem Längsschnitt,
Figur 5
   einen Teil der Transporteinrichtung im Bereich des Antriebs in in bezug auf Fig. 1 vergrößertem Maßstab,
Figur 6
   einen teilweisen Querschnitt durch die Transporteinrichtung in deren Längsbereich,
Figur 7
   einen teilweisen Querschnitt durch die Transporteinrichtung in deren Antriebs(Spann)bereich,
Figur 8
   eine der Figur 1 entsprechende schematische Darstellung der Transporteinrichtung mit wahlweise einsetzbaren Wechselmöglichkeiten für die Zellenbleche,
Figur 9
   eine alternative Ausführung einer Kupplungseinrichtung für die Kupplungsmitnahme der Zellenbleche durch das Transportmittel,
Figur 10
   einen teilweisen Querschnitt durch die in Figur 9 dargestellte Transporteinrichtung,
Figur 11
   eine weitere Abwandlung der Transporteinrichtung,
Figur 12
   einen teilweisen Querschnitt durch die in Fig. 11 dargestellte Transporteinrichtung und
Figur 13
   eine Aufsicht auf einen Teilausschnitt einer Transportkette zur Anwendung bei einer in den Figuren 11 und 12 gezeigten Transporteinrichtung.

In Figur 1 ist eine Transporteinrichtung 1 einer im einzelnen nicht dargestellten Behälter-Füll- und Verschließmaschine dargestellt. Nur andeutungsweise sind von der Behälter-Füll- und Verschließmaschine eine Behälterzuführstation 2, eine Füllstation 3, eine Deckelzuführstation 4 und eine Siegelstation 5 angedeutet. Die Transporteinrichtung 1 weist ein endlos umlaufendes Transportmittel in Form von zwei mit Abstand zueinander angeordneten Transportketten 7 auf, die auf einer Spannseite und auf einer Antriebsseite um dort vorgesehene Umlenkräder 8 geführt sind. Zwischen den Transportketten 7 erstrecken sich Zellenbleche 9, die zur Aufnahme von zu füllenden Behältern aus Kunststoff, Pappe, Papier, Glas, Blech oder dergleichen dienen. Während der Vorwärtsbewegung des Transportmittels 6 in Richtung des Pfeils 11 lassen sich die in weiter unten näher beschriebener Weise mit den Transportketten 7 verbindbaren Zellenbleche 9 durch die Behälter-Füll- und Verschließmaschine bewegen, wobei sie nacheinander unterhalb der Arbeitsstationen 2 bis 5 vorbeibewegt werden. Zur Führung der über Kupplungselemente 12 mit den Transportketten 7 verschraubungslos kuppelbaren Zellenbleche 9 dienen im Bereich des Obertrums des Transportketten 7 befindliche Führungsleisten 13, 14 sowie im Bereich des unteren Trums der Transportketten 7 befindliche Führungsleisten 15, 16. Die Ausgestaltung dieser Führungsleisten wird weiter unten näher erläutert. In den Umkehr- und Wendebereichen auf der Spannseite und der Antriebsseite der Transporteinrichtung 1 befinden sich gleichfalls zur Führung der Zellenbleche bzw. der Kupplungselemente 12 dienende Gleitelemente 17, 18.

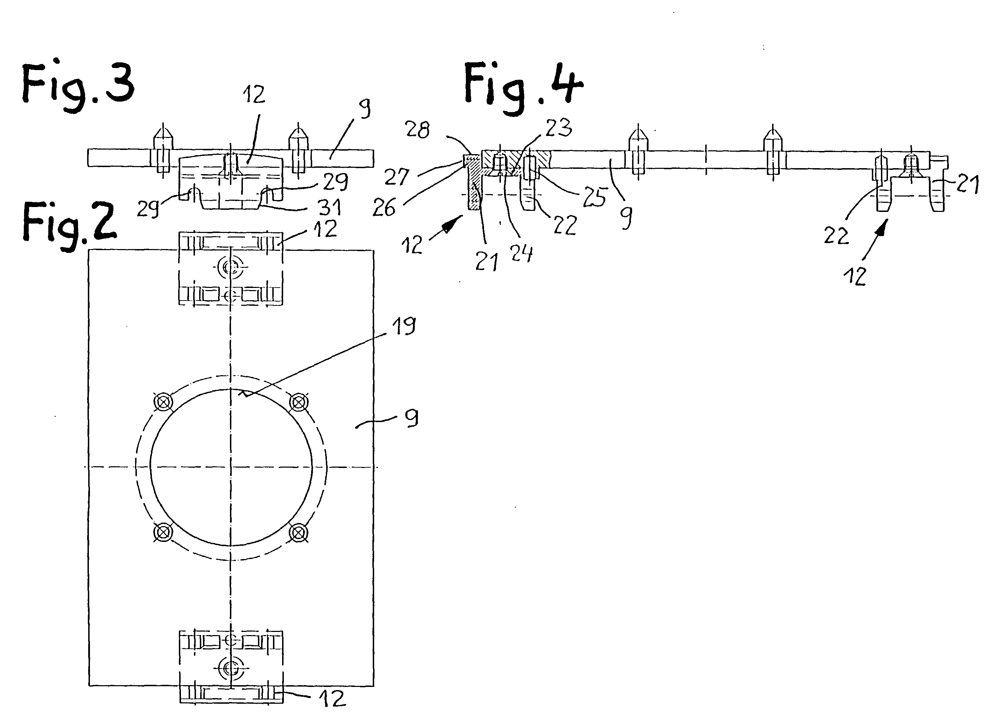

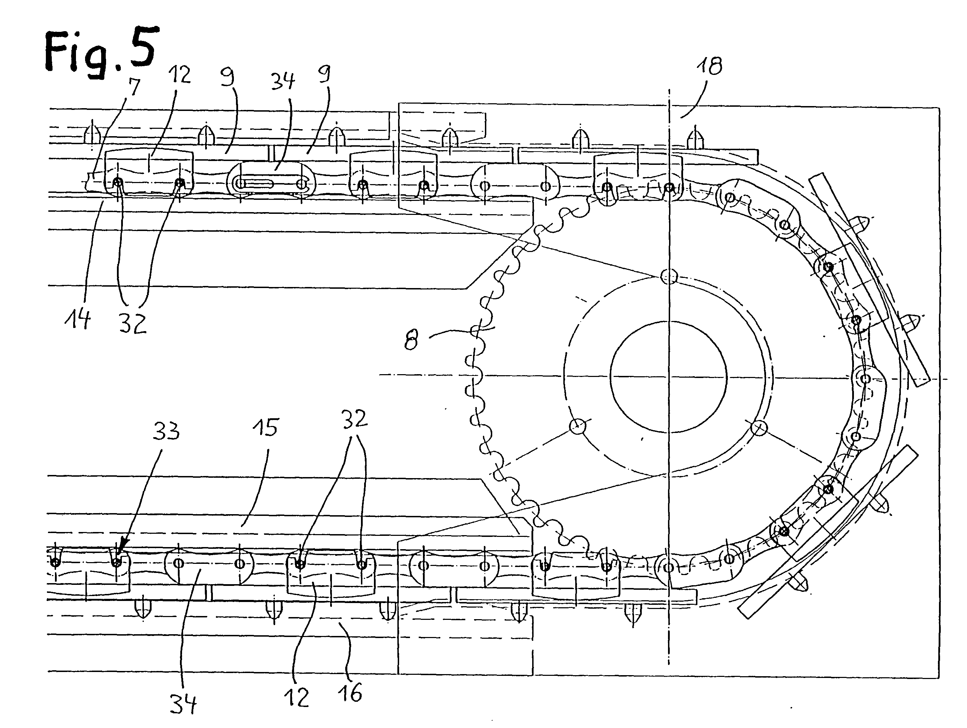

In den Figuren 2 bis 4 ist ein Zellenblech 9 dargestellt. Dieses weist nur beispielhaft eine zentrische Öffnung 19 zur Aufnahme eines dort nicht dargestellten Behälters auf. Im Bereich der beiden Stirnseiten des Zellenblechs 9 sind die Kupplungselemente 12 befestigt. Die als Mitnehmerlaschen ausgebildeten Kupplungselemente sind im Querschnitt U-förmig ausgebildet und besitzen jeweils eine die zugeordnete Transportkette 7 umgreifende Seitenwandung 21, 22 sowie einen die beiden Seitenwandungen miteinander verbindenden Stegteil 23. Im Bereich des Stegteils 23 ist die Mitnehmerlasche 12 über eine Sechskantschraube 24 an der Unterseite des Zellenblechs 9 befestigt. Zur Zentrierung ist von der Unterseite her ein Stift 25 eingesetzt. Die außen liegende Seitenwandung 21 weist einen außerhalb der Stirnkante des Zellenblechs 9 liegenden Verlängerungsteil 26 auf, der an seiner Außenseite und an seiner im wesentlichen rechtwinklig dazu verlaufenden Stirnkante Führungsflächen 27, 28 zum Zusammenwirken mit den vorzugsweise aus Kunststoff hergestellten Gleitelementen 17, 18 in den Umlenk- und Wendebereichen der Transporteinrichtung 1 aufweist.

Aus Figur 3 ist ersichtlich, daß in den Seitenwandungen 21, 22 zwei mit Abstand zueinander liegende Lagerausnehmungen 29 vorgesehen sind, die einseitig offen sind und an ihren einander zugewandten Innenseiten eine Schräge 31 aufweisen. Diese Schrägen 31 erleichtern das Einhängen der Mitnehmerlaschen 12 bzw. der Zellenbleche 9 auf seitlich überstehende Bolzenteile 32 von Kettengliedbolzen 33 (Fig. 5), die in bekannter Weise zur Verbindung der einzelnen Kettenglieder der Transportketten 7 dienen. Insgesamt ist in diesem Bereich die Ausgestaltung der Mitnehmerlaschen 12 derart, daß sich die Lagerausnehmungen 29 jeweils im Bereich eines hakenförmig ausgebildeten Teils der Mitnehmerlasche 12 befinden.

Figur 5 zeigt weiterhin, daß zwischen den mittig an den Zellenblechen 9 befestigten Mitnehmerlaschen 12 im Bereich zweier benachbart zueinanderliegender Zellenbleche 9 speziell ausgestaltete Abstützlaschen 34 vorgesehen sind, durch die sichergestellt wird, daß die Zellenbleche 9 im Längsbereich der Transporteinrichtung 1 nicht kippen können.

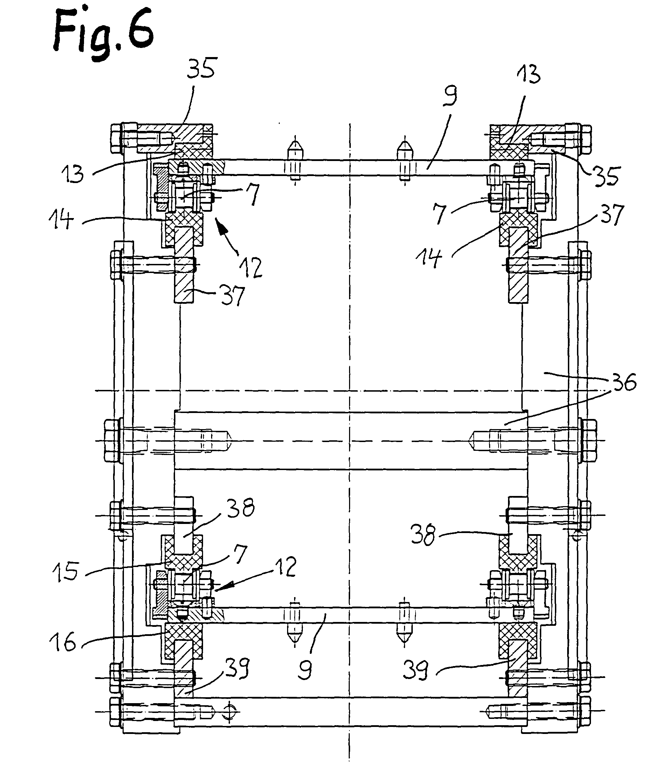

Aus der in Figur 6 gezeigten Schnittdarstellung durch den Längsbereich der Transporteinrichtung 1 ist ersichtlich, daß die im Bereich jeder Transportkette 7 oben liegende Gleitschiene 13 an einem Abstützträger 35 befestigt ist, der seinerseits an einem Rahmen 36 der Transporteinrichtung 1 befestigt ist. Die vorzugsweise als Rollenkette ausgebildete Transportkette 7 stützt sich ihrerseits im oberen Bereich an der Gleitschiene 14 ab, die selbst wiederum auf einem Abstützträger 37 ruht. In entsprechender Weise ist im Bereich des unteren Trums jeder Transportkette 7 die dort befindliche Gleitschiene 15 nach oben hin an einem Abstützträger 38 abgestützt und die unten liegende Gleitschiene 16 an einem entsprechend ausgebildeten Abstützträger 39.

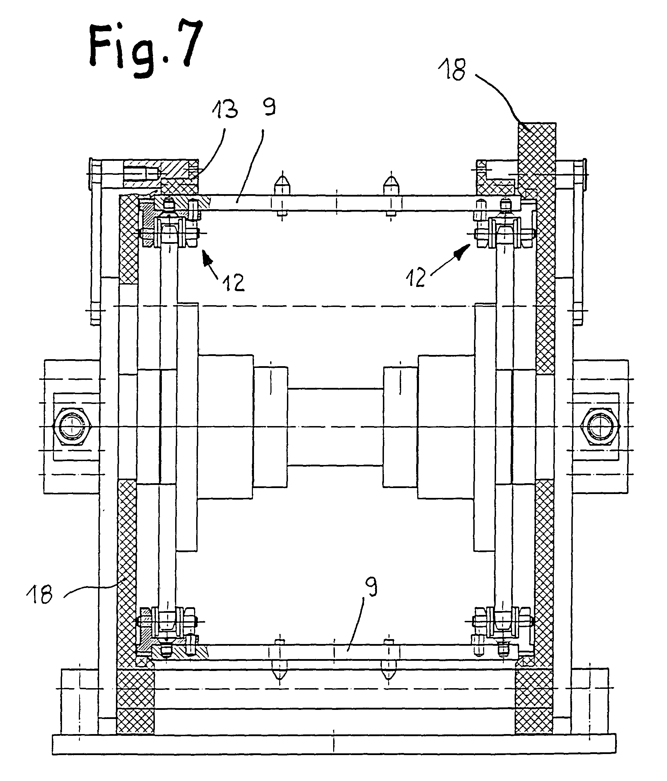

In den Umlenk- und Wendebereichen der Transporteinrichtung 1 (Figur 7) erfolgt die Abstützung der Zellenbleche 9 an den hier sich gleichfalls erstreckenden Gleitschienen 13 und an den gleichfalls aus Kunststoff hergestellten, halbkreisförmig ausgebildeten Gleitelementen 17 bzw. 18.

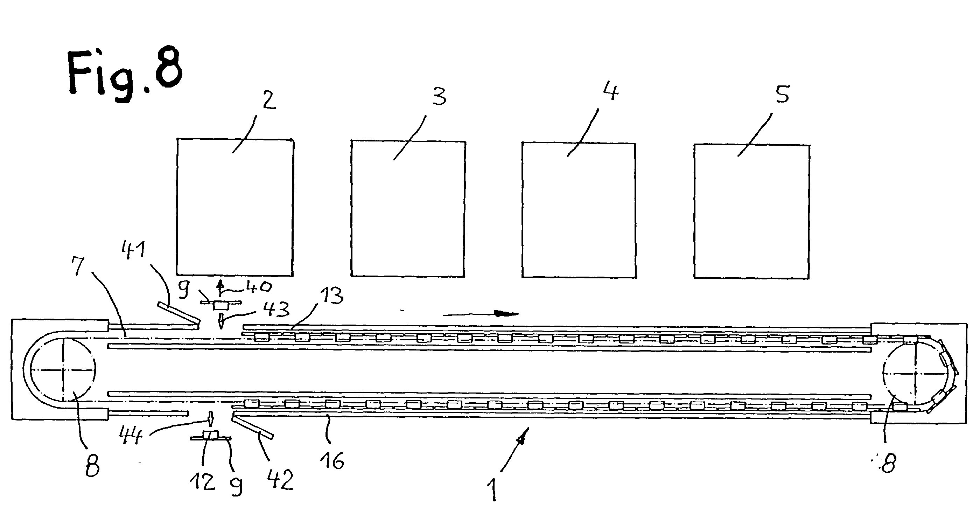

In Figur 8 sind zwei Möglichkeiten für das Einsetzen und das Entfernen von Zellenblechen 9 dargestellt. In beiden Fällen ist vorgesehen, daß im Längsbereich der Transporteinrichtung die Gleitschienen 13 und 16 einschließlich ihrer Abstützträger 35, 39 auf einem Teilstück unterbrochen sind und in diese Unterbrechung jeweils ein aufklappbarer und verschließbarer Niederhalter 41, 42 eingesetzt ist, der gegebenenfalls durch den Einsatz einer Lageüberwachung bezüglich seiner Offen- oder Geschlossen-Stellung kontrolliert steuerbar ist. Bei geöffnetem Niederhalter 41 können über die so entstandene Öffnung auszutauschende Zellenbleche 9 entnommen werden, so wie dies durch den nach oben weisenden Pfeil 40 angedeutet ist. Gleichzeitig können aber auch bei dieser Ausführungsvariante an der gleichen Stelle entsprechend dem Pfeil 43 andersformatige Zellenbleche wieder in die Transporteinrichtung eingesetzt werden. Die Zellenbleche können manuell entnommen und eingesetzt werden. Durch eine geeignete Schaltung, beispielsweise eine Zweihandschaltung, wird die Transportkette jeweils nach Entnahme eines Zellenblechs 9 taktweise weitergeschaltet und zwar so lange, bis ein kompletter Umlauf der Transportkette 7 durchgeführt ist.

Bei einer abgewandelten Ausführungsvariante werden neue Zellenbleche 9 gemäß der vorbeschriebenen Darstellung entsprechend dem Pfeil 43 am Niederhalter 41 eingesetzt, wenn dieser sich in seiner Offenstellung befindet. An dem geöffneten unten liegenden Niederhalter 42 lassen sich die Zellenbleche 9 entsprechend der Pfeilangabe 44 entnehmen bzw. diese Zellenbleche fallen aufgrund ihrer Schwerkraft bei geöffnetem Niederhalter nach unten und können dort von einem beispielsweise trommelartig oder schachtartig ausgebildeten Zellenblechmagazin aufgenommen werden. Selbstverständlich kann anstelle eines manuellen Wechsels der Zellenbleche 9 grundsätzlich auch ein automatischer Wechsel erfolgen.

Bei einer in den Figuren 9 und 10 dargestellten Abwandlung der Transporteinrichtung 1 weist die Mitnehmerlasche 12 keine Seitenwandungen 21, 22 auf. Dafür besitzt sie an der Unterseite ihres Stegteils 23 einen Mitnahmestift 45, die direkt zwischen Rollen 46 einer als Rollenkette 47 ausgebildeten Transportkette 7 eingesetzt wird. Auf diese Weise werden die jeweils zugehörigen Zellenbleche 9 an der Rollenkette 47 fixiert. Wie aus Figur 9 ersichtlich, weisen die Mitnahmestifte 45 einen mit T bezeichneten Teilungsabstand auf. Entsprechend diesem Teilungsabstand sind am Außenumfang der Umlenkräder 8 der Transporteinrichtung 1 Zahnlücken 48 vorgesehen, in die die Mitnahmestifte 45 während des Umlaufs im Umlenk- bzw. Wendebereich eingreifen. Die Abstützung der Zellenbleche kann erforderlichenfalls wiederum durch entsprechende Gleitelemente 18 erfolgen, wie das weiter oben bereits beschrieben worden ist.

In den Figuren 11 bis 13 ist eine weitere Abwandlung der Transporteinrichtung 1 dargestellt. Hier befindet sich in jeder Seitenwandung 21, 22 der Mitnehmerlaschen 12 ein Randausschnitt 49, mittels der die Mitnehmerlasche 12 über seitlich vorstehende Aufnahmetaschen 51 von Kettenlaschen 52 der Transportkette 7 greift und auf diese Weise eine Kupplung der Zellenbleche 9 mit der Transportkette 7 gewährleistet. Die Führung im Umlenkbereich erfolgt entweder wie bei den oben beschriebenen Ausführungen oder aber auch in der Weise, daß die Zellenbleche mit ihren Längsrändern an entsprechend bogenförmig ausgebildeten Gleitelementen während der Wendebewegung anliegen.

## Patentansprüche

1. Transporteinrichtung (1) mit wenigstens einer angetriebenen und Tragplatten (9) entlang einer endlosen Umlaufbahn bewegenden Transportkette (7) und mit an den Tragplatten (9) angeordneten Kupplungselementen (12) und mit an der Transportkette (7) angeordneten Gegenkupplungselementen (32, 33, 51), wobei die Kupplungselemente (12) und die Gegenkupplungselemente (32, 33, 51) im wesentlichen senkrecht zur Kettenlängserstreckung ineinander steckbar ausgebildet sowie die Tragplatten (9) durch Führungsleisten (13, 14, 15, 16) entlang der Umlaufbahn geführt sind, **dadurch gekennzeichnet**, daß die Tragplatten als Zellenbleche (9) ausgebildet sind, die Kupplungselemente (12) und die Gegenkupplungselemente (13) im wesentlichen senkrecht zur Kettenlängserstreckung einen Sitz zur Mitnahme jedes Zellenbleches (9) durch die Transportkette (7) bilden und in ihrer eingesteckten Lage nicht fixierbar sind sowie ferner die Führungsleisten (13, 14, 15, 16) die Zellenbleche (9) entlang der gesamten Umlaufbahn in ihrer eingesteckten Lage fixieren.

2. Transporteinrichtung nach Anspruch 1, **dadurch gekennzeichnet,** daß zwei mit Abstand zueinander angeordnete, endlos umlaufend angetriebene und vorzugsweise als Rollenketten ausgebildete Transportketten (7) vorgesehen sind.

3. Transporteinrichtung nach Anspruch 1 oder 2, **dadurch gekennzeichnet,** daß die Kupplungselemente von an gegenüberliegenden Seiten der Zellenbleche (9) angeordneten Mitnehmerlaschen (12) gebildet sind.

4. Transporteinrichtung nach Anspruch 1 und 2, **dadurch gekennzeichnet,** daß die Gegenkupplungselemente von seitlich über die Kettenglieder der Transportkette (7) überstehenden Bolzenteilen (32) von Kettengliedbolzen (33) gebildet sind.

5. Transporteinrichtung nach Anspruch 3, **dadurch gekennzeichnet**, daß die Mitnehmerlaschen (12) zwischen zwei benachbart zueinander angeordneten Kettengliedbolzen eines Kettenglieds bzw. der Rollen (46) einer Rollenkette (47) zentrierend eingreifende Mitnahmestifte (45) und in einem Wende-/Umlenkbereich der Transporteinrichtung (1) angeordnete Umlenkräder (8) an ihrem Außenumfang im Teilungsabstand T der Mitnahmestifte (45) zueinander angeordnete Zahnlücken (48) aufweisen.

6. Transporteinrichtung nach Anspruch 3, **dadurch gekennzeichnet,** daß die Mitnehmerlaschen (12) im Querschnitt im wesentlichen U-förmig ausgebildet sind, deren mit Abstand gegenüberliegenden Seitenwandungen (21, 22) die jeweils zugeordnete Transportkette (7) reiterartig umgreifen.

7. Transporteinrichtung nach den Ansprüchen 4 und 6, **dadurch gekennzeichnet,** daß in jeder Seitenwandung (21, 22) der Mitnehmerlasche (12) wenigstens eine, vorzugsweise zwei Lagerausnehmungen (29) angeordnet sind, über die die Mitnehmerlasche (12) und damit das Zellenblech (9) in beidseitig in der Breite über die Kettenglieder vorstehende Bolzenteile (32) der Kettengliedbolzen (33) lose eingehängt sind.

8. Transporteinrichtung nach Anspruch 7, **dadurch gekennzeichnet,** daß die Lagerausnehmung (29) jeweils im Bereich eines hakenförmig ausgebildeten Teils jeder Seitenwandung (21, 22) der Mitnehmerlasche (12) angeordnet ist und daß vorzugsweise jeweils die Innenwandung des hakenförmigen Teils eine ein erleichtertes Einhängen der Mitnehmerlasche (12) auf die Kettengliedbolzen (33) ermöglichende Schräge (31) aufweist.

9. Transporteinrichtung nach einem der Ansprüche 6 bis 8, **dadurch gekennzeichnet,** daß in jeder Seitenwandung (21, 22) der Mitnehmerlasche (12) ein Randausschnitt (49) angeordnet ist, mittels der die Mitnehmerlasche (12) über seitliche vorstehende Aufnahmetaschen (51) von Kettenlaschen (52) der Transportkette (7) greift.

10. Transporteinrichtung nach einem der Ansprüche 6 bis 9, **dadurch gekennzeichnet,** daß die Mitnehmerlasche (12) bei nicht einstückiger Ausbildung mit dem Zellenblech (9) mit einem sich zwischen den Seitenwandungen (21, 22) erstreckenden Stegteil (23), vorzugsweise durch einen Stift (25) zentriert, an dem Zellenblech (9) fest angeschraubt ist.

11. Transporteinrichtung nach Anspruch 10, **dadurch gekennzeichnet,** daß die Mitnehmerlasche *(12)* an dem Zellenblech (9) in bezug auf dessen Breite mittig befestigt ist.

12. Transporteinrichtung nach einem oder mehreren der Ansprüche 1 bis 11, dadurch gekennzeichnet, daß jeweils benachbarte Zellenbleche (9) im Bereich ihrer einander zugewandten Längsseiten durch an der Transportkette (7) oder dergleichen befestigte Abstützlaschen (34) gegen Kippen abgestützt sind.

13. Transporteinrichtung nach den Ansprüchen 3 und 12, **dadurch gekennzeichnet,** daß die Abstützlaschen (34) und die Mitnehmerlaschen (12) abwechselnd an der Transportkette (7) oder dergleichen befestigt sind.

14. Transporteinrichtung nach einem der Ansprüche 6 bis 11, **dadurch gekennzeichnet**, daß die Mitnehmerlasche (12) an ihrer außen liegenden Seitenwandung (21) einen außerhalb der Seitenkante des Zellenblechs (9) liegenden Verlängerungsteil (26) mit an seiner Außenseite und seiner im wesentlichen rechtwinklig dazu verlaufenden Stirnkante befindlichen Führungsflächen (27, 28) zum Zusammenwirken der im Längsbereich und/oder Umlenk- und Wendebereich der Transporteinrichtung (1) angeordneten Führungsleisten (13, 14, 15, 16, 17, 18) aufweist, die von Abstützträgern (35, 37, 38, 39) gehalten sind.

15. Transporteinrichtung nach Anspruch 14, **dadurch gekennzeichnet,** daß die aus Kunststoff hergestellten Führungsleisten im Längsbereich der Transporteinrichtung (1) von Gleitschienen (13, 14, 15, 16) und im Umlenk- bzw. Wendebereich der Transporteinrichtung (1) halbkreisförmigen Gleitelementen (17, 18) gebildet sind.

16. Transporteinrichtung nach Anspruch 15, **dadurch gekennzeichnet,** daß die Gleitschienen (13, 16) und die Abstützträger (35, 39) im Längsbereich der Transporteinrichtung (1) auf einem zum Einbringen und/oder Entfernen von Zellenblechen (9) geeigneten Teilstück unterbrochen ausgebildet sind und daß in dieser Unterbrechung jeweils ein aufklappbarer und verschließbarer Niederhalter (41, 42) angeordnet ist, der gegebenenfalls bezüglich seiner Offen- oder Geschlossen-Stellung durch eine Lagesteuerung überwacht ist.

17. Transporteinrichtung nach Anspruch 16, **dadurch gekennzeichnet**, daß der aufklappbare Niederhalter (41) für das Einbringen bzw. Entfernen der Zellenbleche in die Transportvorrichtung (1) im Bereich des Obertrums der Transportkette (7) oder dergleichen und der aufklappbare Niederhalter (42) für das Entfernen der Zellenbleche (9) aus der Transporteinrichtung (1) im Bereich des Untertrums der Transportkette (7) oder dergleichen angeordnet ist.

18. Transporteinrichtung nach Anspruch 17, **dadurch gekennzeichnet,** daß der obere Niederhalter (41) und der untere Niederhalter (42) im wesentlichen in einem gemeinsamen Bereich des Längsbereichs der Transporteinrichtung (1) angeordnet sind.

19. Transporteinrichtung nach Anspruch 17 oder 18, **dadurch gekennzeichnet,** daß im Bereich der Niederhalter (41, 42) ein beispielsweise trommelartig oder schachtartig ausgebildetes Zellenblechmagazin angeordnet ist.

## Claims

1. Conveyor (1) having at least one driven conveyor chain (7) moving support plates (9) along a continuous circular path and with coupling elements (12) located on the support plate (9) and with countercoupling elements (32, 33, 51) located on the conveyor chain (7), the coupling elements (12) and countercoupling elements (32, 33, 51) being pluggable into one another substantially perpendicular to the chain longitudinal extension and the support plates (9) are guided by guide strips (13, 14, 15, 16) along the circular path, characterized in that the support plates are constructed as cell plates, the coupling elements (12) and countercoupling elements (13) form a seat for driving each cell plate (9) through the conveyor chain (7) substantially perpendicular to the chain longitudinal extension and cannot be fixed in their inserted position, the guide strips (13, 14, 15, 16) fixing the cell plates (9) in their inserted position along the entire circular path.

2. Conveyor according to claim 1, characterized in that there are two spaced conveyor chains (7) driven in continuously circulating manner and preferably constructed as roller chains.

3. Conveyor according to claim 1 or 2, characterized in that the coupling elements are formed by driving tabs (12) placed on opposite sides of the cell plates (9).

4. Conveyor according to claim 1 and 2, characterized in that the countercoupling elements are formed by pin parts (32) of chain link pins (33) projecting over the chain links of the conveyor chain (7).

5. Conveyor according to claim 3, characterized in that between two adjacent chain link pins of a chain link or the rollers (46) of a roller chain (47), the driving tabs (12) have driving pins (45) engaging in centring manner and return pulleys (8) located in a turning/reversing area of the conveyor (1) have tooth gaps (48) on the outer circumference arranged with the spacing T of the driving pins (45).

6. Conveyor according to claim 3, characterized in that the driving tabs (12) are cross-sectionally substantially U-shaped and their spaced side walls (21, 22) embrace in straddling manner the in each case associated conveyor chain (7).

7. Conveyor according to claims 4 and 6, characterized in that in each side wall (21, 22) of the driving pad (12) is provided at least one and preferably two bearing recesses (29), by means of which the driving tab (12) and consequently the cell plate (9) are loosely hung in pin parts (32) of the chain link pins (33) projecting in both sides in the width over the chain links.

8. Conveyor according to claim 7, characterized in that the bearing recess (29) is in each case located in the area of a hook-shaped part of each side wall (21, 22) of the driving tab (12) and that preferably in each case the inner wall of the hook-shaped part has a bevel (31) permitting a facilitated hanging of the driving tab (12) on the chain link pins (33).

9. Conveyor according to one of the claims 6 to 8, characterized in that in each side wall (21, 22) of the driving tab (12) is provided a marginal cutout (49) by means of which the driving tab (12) engages over laterally projecting reception pockets (51) of chain side bars (52) of the conveyor chain (7).

10. Conveyor according to one of the claims 6 to 9, characterized in that in the case of a non-one piece construction with the cell plate (9), the driving tab (12) is firmly screwed to the cell plate (9) with a web part (23) extending between the side walls (21, 22) and preferably centred by a pin (25).

11. Conveyor according to claim 10, characterized in that the driving tab (12) is centrally fixed to the cell plate (9) with respect to the width thereof.

12. Conveyor according to one or more of the claims 1 to 11, characterized in that in each case adjacent cell plates (9) are braced against tilting in the area of their facing longitudinal sides by bracing tabs (34) fixed to the conveyor chain (7) or the like.

13. Conveyor according to claims 3 and 12, characterized in that the bracing tabs (34) and driving tabs (12) are alternately fixed to the conveyor chain (7) or the like.

14. Conveyor according to one of the claims 6 to 11, characterized in that on its outer side wall (21) the driving tab (12) has a lengthening part (26) located outside the lateral edge of the cell plate (9) and with guide faces (27, 28) on its outside and its terminal edge extending substantially at right angles thereto for cooperating with the guide strips (13, 14, 15, 16, 17, 18) located in the longitudinal area and/or the turning and reversing area of the conveyor (1) and which are held by bracing supports (35, 37, 38, 39).

15. Conveyor according to claim 14, characterized in that the plastic guide strips in the longitudinal area of the conveyor (1) are formed by slide bars (13, 14, 15, 16) and in the turning or reversing area of the conveyor (1) by semicircular slide members (17, 18).

16. Conveyor according to claim 15, characterized in that the slide bars (13, 16) and support carriers (35, 39) are constructed in interrupted manner in the longitudinal area of the conveyor (1) on a part suitable for introduction and/or removal from the cell plates (9) and that in said interruption is in each case provided an openable and closable hold-down device (41, 42), which is optionally monitored with respect to its open or closed position by a position control means.

17. Conveyor according to claim 16, characterized in that the openable hold-down device (41) for the introduction or removal of the cell plates with respect to the conveyor (1) is positioned in the vicinity of the upper strand of the conveyor chain (7) or the like and the openable hold-down device (42) for the removal of the cell plates (9) from the conveyor (1) is located in the vicinity of the lower strand of the conveyor chain (7) or the like.

18. Conveyor according to claim 17, characterized in that the upper hold-down device (41) and the lower hold-down device (42) are essentially located in a common region of the longitudinal area of the conveyor (1).

19. Conveyor according to claim 17 or 18, characterized in that there is an e.g. drum or shaft-like cell plate magazine in the vicinity of the hold-down devices (41, 42).

## Revendications

1. Convoyeur (1) présentant au moins une chaîne de transport (7) entraînée et déplaçant des plaques-support (9) le long d'un circuit sans fin, des éléments d'accouplement (12) disposés sur les plaques-support (9) et des éléments de désaccouplement (32,33,51), dans lequel les éléments d'accouplement (12) et les éléments de désaccouplement (32,33,51) sont réalisés insérables les uns dans les autres sensiblement perpendiculairement à la direction longitudinale de la chaîne et les plaques-support (9) sont guidées par des glissières de guidage (13,14,15,16) le long du circuit, caractérisé en ce que les plaques-support sont réalisées en tôles alvéolaires (9), en ce que les éléments d'accouplement (12) et les éléments de désaccouplement forment un siège pour l'entraînement de chaque tôle alvéolaire (9) par la chaîne de transport (7) sensiblement perpendiculairement à la direction longitudinale de la chaîne, et ne peuvent pas être immobilisés dans leur position insérée, et en ce qu'ensuite les glissières de guidage (13,14,15,16) immobilisent les tôles alvéolaires (9) le long de l'ensemble du circuit dans leur position insérée.

2. Convoyeur selon la revendication 1, caractérisé en ce que sont prévues deux chaînes de transport (7) disposées à intervalle l'une de l'autre, entraînées en continu et réalisées de préférence sous la forme de chaînes à rouleaux.

3. Convoyeur selon la revendication 1 ou 2, caractérisé en ce que les éléments d'accouplement sont constitués par des éclisses de liaison (12) disposées sur des faces en regard des tôles alvéolaires (9).

4. Convoyeur selon la revendication 1 ou 2, caractérisé en ce que les éléments de désaccouplement sont constitués par des parties (32) d'axes (33) de maillons de chaîne faisant saillie latéralement au-delà des maillons de chaîne de la chaîne de transport (7).

5. Convoyeur selon la revendication 3, caractérisé en ce que les éclisses de liaison (12) présentent entre deux axes de maillons de chaîne d'un maillon de chaîne disposés adjacents l'un à l'autre ou ceux de rouleaux (46) d'une chaîne à rouleaux (47) des broches de liaison (45) venant en prise centralement, et des poulies de renvoi (8) disposées dans une zone d'inversion/renvoi du convoyeur (1) qui présentent sur leur périphérie extérieure, dans la zone de séparation T des broches de liaison (45) des entredents (48) disposés de façon correspondante.

6. Convoyeur selon la revendication 3, caractérisé en ce que les éclisses de liaison (12) présentent une section conformée sensiblement en U, éclisses dont les parois latérales (21,22) en regard à distance l'une de l'autre chevauchent chaque chaîne de transport correspondante.

7. Convoyeur selon les revendications 4 et 6, caractérisé en ce que dans chaque paroi latérale (21,22) de l'éclisse de liaison (12) sont ménagées au moins un, de préférence deux évidements de palier (29), au-dessus desquels l'éclisse de liaison (12) et ainsi la tôle alvéolaire (9) sont accrochés dans les parties (32) des axes (33) de maillons de chaîne faisant saillie des deux côtés en largeur au-delà des maillons de chaîne.

8. Convoyeur selon la revendication 7, caractérisé en ce que l'évidement de palier (29) est disposé à chaque fois dans la zone d'une partie conformée en crochet de chaque paroi latérale (21,22) de l'éclisse de liaison (12), et en ce que de préférence la paroi interne de chaque partie en forme de crochet présente une rampe (31) facilitant l'accrochage des éclisses de liaison (12) sur les axes (33) de maillons de chaîne.

9. Convoyeur selon l'une quelconque des revendications 6 à 8, caractérisé en ce que dans chaque paroi latérale (21,22) de l'éclisse de liaison (12) est disposée une découpe de bordure (49), par laquelle l'éclisse de liaison (12) entre en prise par le dessus avec des languettes de réception (51) d'éclisses de chaînes (52) en saillie latéralement.

10. Convoyeur selon l'une quelconque des revendications 6 à 9, caractérisé en ce que l'éclisse de liaison (12), lorsqu'elle n'est pas conformée d'une seule pièce avec la tôle alvéolaire (9), est immobilisée par vissage sur la tôle alvéolaire (9) par une entretoise (23) s'étendant entre les parois latérales (21,22), de préférence centrée par un goujon (25).

11. Convoyeur selon la revendication 10, caractérisé en ce que l'éclisse de liaison (12) est fixée sur la tôle alvéolaire (9) de façon médiane par rapport à sa largeur.

12. Convoyeur selon l'une ou plusieurs des revendications 1 à 11, caractérisé en ce que des tôles alvéolaires (9) adjacentes sont à chaque fois maintenues pour éviter le basculement dans la zone de leurs faces longitudinales en regard par des éclisses de maintien (34) fixées sur la chaîne de transport (7) ou analogue.

13. Convoyeur selon les revendications 3 et 12, caractérisé en ce que les éclisses de maintien (34) et les éclisses de liaison (12) sont fixées de façon alternée sur la chaîne de transport (7) ou analogue.

14. Convoyeur selon l'une quelconque des revendications 6 à 11, caractérisé en ce que l'éclisse de liaison (12) présente sur sa paroi latérale (21) située vers l'extérieur une pièce de prolongement (26) située en-dehors de l'arête latérale de la tôle alvéolaire (9) comportant sur sa face extérieure et son arête frontale s'étendant sensiblement à angle droit par rapport à celle-ci des surfaces de guidage (27,28) pour la coopération avec des glissières de guidage (13,14,15,16,17,18) disposées dans la zone longidutinale et/ou dans la zone de retour et de renvoi du convoyeur (1), glissières soutenues par des longerons d'appui (35,37,38,39).

15. Convoyeur selon la revendication 14, caractérisé en ce que les glissières de guidage réalisées an matière plastique sont constituées dans la zone longitudinale du convoyeur (1) par des coulisses (13,14,15,16) et dans la zone de retour ou de renvoi du convoyeur (1) par des éléments de glissière (17,18) semi-circulaires.

16. Convoyeur selon la revendication 15, caractérisé en ce que les coulisses (13,16) et les longerons d'appui (35,39) sont conformés de manière discontinue dans la zone longitudinale du convoyeur (1) sur une pièce convenant pour l'introduction et/ou l'enlèvement de tôles alvéolaires (9), et en ce que dans ce vide est disposé à chaque fois un serre-flan (41,42) relevable et verrouilable qui, le cas échéant, est surveillé par une commande en position ouverte ou fermée.

17. Convoyeur selon la revendication 16, caractérisé en ce que le serre-flan relevable (41) est disposé dans la zone du brin supérieur de la chaîne de transport (7) ou analogue pour l'introduction ou l'enlèvement des tôles alvéolaires dans le convoyeur (1) et en ce que le serre-flan verrouillable (42) est disposé dans la zone du brin inférieur de la chaîne de transport (7) pour l'enlèvement des tôles alvéolaires (9) du convoyeur (1).

18. Convoyeur selon la revendication 17, caractérisé en ce que le serre-flan (41) supérieur et le serre-flan (42) inférieur sont disposés sensiblement dans une zone commune de la zone longitudinale du convoyeur (1).

19. Convoyeur selon la revendication 17 ou 18, caractérisé en ce que dans la zone des serre-flans (41,42) est disposé un magasin pour tôles alvéolaires conformé par exemple en tambour ou en puits.
